# EUROPÄISCHE PATENTSCHRIFT

(11) **EP 3 836 109 B1**
(45) Veröffentlichungstag und Bekanntmachung des Hinweises auf die Patenterteilung: **18.03.2026**
(21) Anmeldenummer: 20208572.6
(22) Anmeldetag: 19.11.2020
(51) Int. Cl.: G08C 17/00

(54) **AUSRÜSTUNGSSYSTEM FÜR KINEMATOGRAFISCHE PRODUKTIONEN**
EQUIPMENT SYSTEM FOR CINEMATOGRAPHIC PRODUCTIONS
SYSTÈME D'ÉQUIPEMENT POUR PRODUCTIONS CINÉMATOGRAPHIQUES

(30) Priorität: 11.12.2019 DE 102019134028
(43) Veröffentlichungstag der Anmeldung: 16.06.2021
(73) Patentinhaber: Arnold & Richter Cine Technik GmbH & Co. Betriebs KG, 80807 München (DE)
(72) Erfinder: Voss, Hendrik, 81673 München (DE)
(74) Vertreter: Manitz Finsterwald Patent- und Rechtsanwaltspartnerschaft mbB

(56) Entgegenhaltungen:
- WO-A2-2011/127481
- US-A1- 2003 025 802
- US-A1- 2008 100 712
- US-A1- 2017 339 319

## Beschreibung

Die vorliegende Erfindung betrifft ein Ausrüstungssystem für kinematografische Produktionen, die im vorliegenden Zusammenhang auch als Filmproduktionen bezeichnet werden. Das Ausrüstungssystem umfasst wenigstens ein Bewegtbildproduktionsgerät, welches nachfolgend vereinfachend als Filmproduktionsgerät bezeichnet wird und welches auch als Filmproduktions-Ausrüstungsgerät bezeichnet werden könnte. Das Bewegtbildproduktionsgerät bzw. Filmproduktionsgerät kann zumindest eine Bewegtbildkamera, eine Objektivring-Antriebseinheit, eine Motivbeleuchtungsvorrichtung und/oder eine Fernsteuereinheit umfassen. Bei der Fernsteuereinheit kann es sich generell um eine Filmproduktionsgerät-Fernsteuereinheit (also eine Fernsteuereinheit für ein Bewegtbildproduktionsgerät) und insbesondere um eine Kamera-Fernsteuereinheit oder eine Beleuchtungs-Fernsteuereinheit handeln.

Bei kinematografischen Produktionen (insbesondere für Kino, aber auch für Fernsehen oder Streaming-Dienste) kommen verschiedene Arten von Filmproduktionsgeräten zum Einsatz, für welche in verschiedenen Situationen eine Fernbedienbarkeit wünschenswert ist.

Eine elektronische Bewegtbildkamera umfasst üblicherweise ein integriertes optisches System (Kameraobjektiv) oder einen Objektivanschluss zum Montieren eines Wechselobjektivs, ferner einen elektronischen Bildsensor zum Erzeugen von Bildsignalen aus einfallendem Licht und eine Bildsignalverarbeitungseinrichtung zum Erzeugen eines digitalen Bilddatenstroms aus den Bildsignalen. Zur Bedienung einer Bewegtbildkamera sind vor und während der Aufnahme eine Vielzahl von Parametern einzustellen und zu variieren, wie beispielsweise die Bildaufnahmefrequenz, die Verschlusszeit, oder die Irisblendenöffnung, die Fokuslage (Schärfe) oder die Brennweite (Zoom-Faktor) des Objektivs. Neben einer Einstellung dieser Parameter an der Kamera selbst können einige oder alle dieser Parameter auch über entsprechende Fernsteuereinheiten vorgenommen werden, wobei hierfür überwiegend funkbasierte Fernsteuereinheiten zum Einsatz kommen.

Die Einstellung der Irisblendenöffnung, der Fokuslage und der Brennweite erfolgt oftmals an Objektivringen des Kameraobjektivs. Zur einfacheren und zuverlässigeren Einstellung der Kameraobjektive werden dazu bevorzugt Bedienelemente verwendet, die entweder an der Kamera selbst angebracht oder als Fernsteuerungen realisiert sind. Die Fernbedienbarkeit kann beispielsweise über eine externe Objektivring-Antriebseinheit erfolgen, welche mit dem Kameraobjektiv verbunden wird. Bei einer solchen Objektivring-Antriebseinheit sind ein oder mehrere Stellmotoren vorgesehen, die jeweils über ein Zahnritzel ein Drehmoment auf einen Zahnkranz eines Objektivrings des Kameraobjektivs übertragen und auf diese Weise eine Einstellung des Objektivrings zur Fokussierung oder zur Einstellung der Irisblende oder der Brennweite bewirken. Eine derartige Objektivring-Antriebseinheit ist beispielsweise aus DE 42 19 331 A1 bekannt. Objektivring-Antriebseinheiten können auch als Nachrüstlösungen für ursprünglich nicht fernbedienbare Bewegtbildkameras vorgesehen sein.

Weiterhin ist auch für Motivbeleuchtungsvorrichtungen, die zum Ausleuchten eines Filmsets dienen, eine Fernbedienbarkeit wünschenswert. Eine derartige Motivbeleuchtungsvorrichtung kann wenigstens eine Lichtquelle zum Aussenden von Licht, optional eine Lichtstrahlbündelungseinrichtung sowie ferner eine Steuereinrichtung zum Steuern der Lichtquelle umfassen. Optional kann eine aktive oder passive Kühleinrichtung zum Kühlen der Lichtquelle vorgesehen sein. Eine stationär montierbare Lichtquelle ist beispielsweise aus WO 2007/028643 A1 bekannt.

Mobile Motivbeleuchtungsvorrichtungen können an einem Stativ befestigt oder an Bewegtbildkameras montiert werden. Mit Hilfe einer zugeordneten Fernsteuereinheit können verschiedene Funktionen fernbedient werden, wie beispielsweise ein Ein- und Ausschalten der Lichtquelle, eine Steuerung der Helligkeit und/oder der Lichtfarbe der Lichtquelle, eine Fokussierung der Lichtstrahlbündelungseinrichtung, oder auch eine Verstellvorrichtung zum Ändern der Ausrichtung der Motivbeleuchtungsvorrichtung.

Diese Aufzählung von Filmproduktionsgeräten ist nicht abschließend, sondern rein beispielhaft. Zur Fernsteuerung der genannten Filmproduktionsgeräte können Fernsteuereinheiten vorgesehen sein, welche im vorliegenden Zusammenhang ebenfalls als Filmproduktionsgeräte bzw. Filmproduktions-Ausrüstungsgerät bezeichnet werden und welche entweder dezidiert einem bestimmten Gerätetyp zugeordnet sind oder welche nach Art einer Universalfernbedienung für verschiedene Typen von Filmproduktionsgeräten eingesetzt werden können, wobei eine jeweilige Fernsteuereinheit auch mehrere Gerätetypen alternativ oder gleichzeitig ansprechen kann.

Eine typische Fernsteuereinheit, insbesondere Kamera-Fernsteuereinheit oder Beleuchtungs-Fernsteuereinheit, weist ein oder mehrere Bedienelemente auf, denen bestimmte Bedienfunktionen fest oder wählbar zugeordnet sein können. Die Bedienungselemente können beispielsweise einen Taster, einen Schalter, einen Drehsteller (z.B. Stellrad), einen Linearsteller (z.B. Schieberegler) oder berührungsempfindliche Bedienelemente wie Touchscreens oder Touchpads umfassen. Weiterhin können ein oder mehrere Anzeigevorrichtungen vorgesehen sein, welche Informationen über einen oder mehrere eingestellte Bedienungswerte wiedergeben. Auch eine Wiedergabe eines von einer Bewegtbildkamera erfassten Bildes an einer Anzeigevorrichtung einer zugeordneten Fernsteuereinheit kann vorgesehen sein. Beispielhafte Fernsteuereinheiten sind aus DE 196 29 484 A1 und WO 2010/046237 A1 bekannt.

Filmproduktionsgeräte mit funkbasierter Fernsteuerung unterliegen, wie sehr viele Funkanwendungen, bestimmten gesetzlichen Regulierungen, die sich von Land zu Land unterscheiden. Diese Regulierungen sehen oftmals für jeweilige Funkanwendungen von Land zu Land abweichende Übertragungsfrequenzen oder Übertragungsprotokolle vor. Wird ein Filmproduktionsgerät in einem Land betrieben, für welches es die geltenden Regularien nicht erfüllt, besteht neben der Gefahr, dass ein solcher Verstoß gegen die Regularien ordnungs- oder strafrechtlich verfolgt wird, auch die weitere Gefahr, dass der Betrieb des Filmproduktionsgeräts durch andere Funkanwendungen gestört werden kann, was unter Umständen zu fehlerhaften Bewegtbildaufzeichnungen und damit verbundenen finanziellen Mehraufwendungen führen kann.

US 2008/100712 A1 betrifft eine Kamera, welche ein ausklappbares Anzeigeelement aufweist. Ein drahtloses Interfacemodul zur Übermittlung von Kameradaten an entfernte Systeme kann lösbar mit dem Anzeigeelement gekoppelt werden, wobei durch einen Austausch eines Interfacemoduls gegen ein anderes das Funkprotokoll, eine Anwendungsfunktionalität oder andere Merkmale geändert werden können.

Ein ähnliches Kamerasystem ist in US 2017/339319A1 beschrieben.

In US 2003/025802 A1 und WO 2011/127481 A2 sind fernbedienbare Filmproduktionsgeräte offenbart.

Es ist eine Aufgabe der Erfindung, ein Ausrüstungssystem für kinematografische Produktionen anzugeben, welches regelkonform und störungsfrei an verschiedenen geografischen Orten betreibbar ist, für welche unterschiedliche Regulierungen für Funkanwendungen gelten.

Die Lösung der Aufgabe erfolgt durch ein Ausrüstungssystem für kinematografische Produktionen mit den Merkmalen des Anspruchs 1. Vorteilhafte Ausführungsformen des Ausrüstungssystems sind in den Unteransprüchen angegeben oder ergeben sich aus der Beschreibung oder den Figuren.

Ein derartiges Ausrüstungssystem für kinematografische Produktionen umfasst generell wenigstens ein Filmproduktionsgerät, bei dem es sich um eine Bewegtbildkamera, eine Objektivring-Antriebseinheit, eine Motivbeleuchtungsvorrichtung und/oder eine Fernsteuereinheit handelt, sowie wenigstens zwei verschiedene Funkmodule. Das Filmproduktionsgerät weist eine Schnittstelle zum wahlweisen Koppeln mit einem der zwei verschiedenen Funkmodule auf, wobei jedes der zwei verschiedenen Funkmodule zur drahtlosen Übermittlung von Steuersignalen und zur drahtgebundenen Kommunikation mit dem gekoppelten Filmproduktionsgerät über die Schnittstelle ausgebildet ist, wobei sich die zwei verschiedenen Funkmodule hinsichtlich ihrer Funkcharakteristik, und zwar hinsichtlich eines verwendeten Frequenzbereichs und/oder eines verwendeten Übertragungsprotokolls, voneinander unterscheiden.

In diesem Sinne ist ein Funkmodul eine Kommunikationsvorrichtung zum unidirektionalen oder bidirektionalen Übertragen von Steuersignalen mit Hilfe modulierter elektromagnetischer Wellen im Radiofrequenzbereich. Ein Funkmodul dient somit insbesondere zum drahtlosen Übermitteln von Steuersignalen oder anderen Signalen an ein anderes Filmproduktionsgerät oder ein hiermit gekoppeltes weiteres Funkmodul, und/oder zum drahtlosen Empfangen von derartigen Signalen. Die Schnittstelle ermöglicht das elektrische bzw. signaltechnische Ankoppeln eines Funkmoduls an ein Filmproduktionsgerät, wobei die Schnittstelle auch als mechanische Schnittstelle bzw. Koppeleinrichtung dienen kann oder eine separate mechanische Schnittstelle bzw. Koppeleinrichtung vorgesehen sein kann.

Die verwendeten Frequenzbereiche und/oder Übertragungsprotokolle unterliegen nationalen oder supranationalen Regularien, welche vom zuständigen Gesetzgeber erlassen werden und oftmals auf Normen oder Standardisierungen basieren, welche von internationalen Organisationen wie der IEEE (Institute of Electrical and Electronics Engineers) erarbeitet werden. Für einen genehmigungsfreien Betrieb von Hochfrequenzgeräten in Industrie, Wissenschaft, Medizin sowie im häuslichen Bereich sind in der Regel bestimmte Frequenzbereiche vorgesehen, die auch als ISM-Bänder (von engl. Industrial, Scientific and Medical Band) bezeichnet werden. Die verschiedenen Frequenzbereiche werden oftmals mit einer jeweiligen charakteristischen Frequenz bezeichnet. Beispiele hierfür sind die Frequenzbereiche um die Frequenzen 315 MHz, 433 MHz, 868 MHz, 915 MHz der 2,4 GHz. Verschiedene Übertragungsprotokolle sind ebenfalls reguliert oder zumindest standardisiert. Beispiele hierfür sind die Übertragungsprotokolle gemäß der Norm IEEE 802.15 (auch als Bluetooth oder WPAN bekannt), IEEE 802.11 (auch als WLAN bekannt) oder IEEE 802.16 (auch als WiMAX bekannt). Häufig sind in den Normen für bestimmte Übertragungsprotokolle zugleich die hierfür verwendbaren Frequenzbereiche definiert.

Das Ausrüstungssystem stellt somit für ein Filmproduktionsgerät verschiedene Typen von austauschbaren Funkmodulen bereit, welche jeweils unterschiedliche Funkcharakteristiken aufweisen. Entsprechend dem geografischen Betriebsort des Filmproduktionsgeräts kann aus den vorhandenen Funkmodulen ein Funkmodul ausgewählt werden, das den dort geltenden (d.h. länderspezifischen) gesetzlichen Regularien hinsichtlich der Funkcharakteristik entspricht. Sofern für einen gegebenen Betriebsort mehrere Funkmodule zur Auswahl stehen, welche regelkonform betrieben werden können, kann bei der Auswahl auch auf eine größtmögliche Störungsfreiheit abgestellt werden. Als Beispiel hierfür sei der Frequenzbereich von 2,4 GHz genannt, in dem weltweit in den meisten Ländern ein genehmigungsfreier Betrieb von Funkanwendungen gestattet ist. Dies führt allerdings dazu, dass sich lokal oftmals sehr viele unterschiedliche Geräte einen begrenzten Frequenzbereich teilen müssen, was zu Störungen oder zumindest zu verlängerten Latenzzeiten führen kann. Hier eröffnet das vorliegende Ausrüstungssystem die Möglichkeit, mit geringem Aufwand durch einen einfachen Wechsel des Funkmoduls in einen weniger störanfälligen Frequenzbereich bzw. auf ein weniger störanfälliges Übertragungsprotokoll auszuweichen.

Gemäß einer Ausführungsform weist jedes der zwei verschiedenen Funkmodule eine Gegenschnittstelle auf, wobei die Gegenschnittstellen der zwei verschiedenen Funkmodule zueinander identisch und zu der Schnittstelle des Filmproduktionsgeräts kompatibel sind. Die genannte Kompatibilität bzw. Identität besteht sowohl in mechanischer Hinsicht, d.h. bezüglich der mechanischen Befestigungsoder Kopplungsmittel, als auch in elektrischer Hinsicht, d.h. insbesondere bezüglich der Anzahl, der Anordnung und der Funktion von jeweiligen elektrischen Kontakten. Somit kann jeder Typ von Funkmodul mit jedem Filmproduktionsgerät des Ausrüstungssystems oder zumindest mit jedem gleichartigen Filmproduktionsgerät gekoppelt werden. Bevorzugt sind die Schnittstellen aller Filmproduktionsgeräte zueinander kompatibel, insbesondere identisch, d.h. ein jeweiliges Funkmodul lässt sich wahlweise mit einer Bewegtbildkamera, einer Motivbeleuchtungsvorrichtung, einer Objektivring-Antriebseinheit oder einer Fernsteuereinheit koppeln.

Bei einigen Ausführungsformen kann das jeweilige Funkmodul eine Steuerschaltung aufweisen, die dazu ausgebildet ist, ein per Funk empfangenes Steuersignal in ein elektrisches Signal umzuwandeln, welches an das gekoppelte Filmproduktionsgerät übermittelt wird, insbesondere über die genannte Gegenschnittstelle des Funkmoduls und die Schnittstelle des gekoppelten Filmproduktionsgeräts. Alternativ oder zusätzlich kann die Steuerschaltung dazu ausgebildet sein, ein von dem gekoppelten Filmproduktionsgerät (insbesondere über die genannte Gegenschnittstelle) empfangenes elektrisches Signal in ein Steuersignal umzuwandeln, welches per Funk ausgesendet wird. Die Steuerschaltung kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA).

Das jeweilige Funkmodul kann eine Funksende- und -empfangseinheit zum Erzeugen und Aussenden bzw. zum Empfangen und Dekodieren von Funksignalen aufweisen (z.B. Transceiver). Das jeweilige Funkmodul kann ein eigenes Gehäuse aufweisen.

Bei einigen Ausführungsformen kann das jeweilige Funkmodul ohne eigene Energiequelle ausgebildet sein, wobei das Funkmodul dazu ausgebildet sein kann, die Versorgung mit der für den Betrieb erforderlichen Energie von dem gekoppelten Filmproduktionsgerät zu beziehen, insbesondere über dessen Schnittstelle.

Erfindungsgemäß umfasst das Ausrüstungssystem zumindest eine Bewegtbildkamera oder eine Objektivring-Antriebseinheit oder eine Motivbeleuchtungsvorrichtung und zumindest eine Fernsteuereinheit zum Fernsteuern der Bewegtbildkamera oder der Objektivantriebseinheit oder der Motivbeleuchtungsvorrichtung, wobei das Ausrüstungssystem zumindest einen ersten Satz und einen zweiten Satz von Funkmodulen umfasst, wobei die Funkmodule des ersten Satzes hinsichtlich ihrer Funkcharakteristik untereinander gleich sind, wobei die Funkmodule des zweiten Satzes hinsichtlich ihrer Funkcharakteristik untereinander gleich sind und wobei die Funkmodule des ersten Satzes sich hinsichtlich ihrer Funkcharakteristik von den Funkmodulen des zweiten Satzes unterscheiden. Je nach dem geografischen Betriebsort bzw. der erwünschten Funkcharakteristik können die Bewegtbildkamera oder die Objektivring-Antriebseinheit oder die Motivbeleuchtungsvorrichtung einerseits und die Filmproduktionsgerät-Fernsteuereinheit andererseits mit Funkmodulen desselben Satzes gekoppelt werden und sind somit hinsichtlich ihrer Funkcharakteristik zueinander kompatibel. Bevorzugt entspricht die Anzahl der Funkmodule eines jeden Satzes der Anzahl an Filmproduktionsgeräten des Ausrüstungssystems, sie sollte jedoch mindestens zwei betragen, nämlich eines für die Bewegtbildkamera oder die Objektivring-Antriebseinheit oder die Motivbeleuchtungsvorrichtung und eines für die Fernsteuereinheit.

Gemäß einer Ausführungsform ist vorgesehen, dass das Ausrüstungssystem wenigstens drei verschiedene Funkmodule umfasst, die sich jeweils hinsichtlich ihrer Funkcharakteristik voneinander unterscheiden.

Bei einigen Ausführungsformen besitzt das jeweilige Filmproduktionsgerät, an welches die Funkmodule des Ausrüstungssystems gekoppelt werden können, ein Gehäuse, wobei die Schnittstelle des jeweiligen Filmproduktionsgeräts derart angeordnet und ausgebildet ist, dass das gekoppelte Funkmodul außerhalb des Gehäuses des Filmproduktionsgeräts angeordnet ist. Dadurch ist ein komfortabler Austausch des Funkmoduls gewährleistet. Durch die Befestigung an einer Außenseite des Gehäuses des Filmproduktionsgeräts ist zudem eine ungehinderte Übertragung der Funksignale gewährleistet.

Gemäß einer weiteren Ausführungsform weist jedes Funkmodul des Ausrüstungssystems eine extern oder intern angeordnete Antenne auf. Somit weist jedes Funkmodul eine eigene Antenne auf, die auf den jeweiligen, vom Funkmodul verwendeten Frequenzbereich optimiert ist, wodurch die Sende- bzw. Empfangsqualität, welche auch die Reichweite beeinflusst, gegenüber einer generischen, im oder am Gerät verbauten Antenne verbessert ist. In diesem Zusammenhang bezeichnet eine extern angeordnete Antenne eine außerhalb eines Gehäuses des Funkmoduls vorgesehene Antenne, während eine interne Antenne innerhalb eines Gehäuses des Funkmoduls vorgesehen ist.

Bei einigen Ausführungsformen ist jedes Funkmodul mit zumindest einem jeweiligen sichtbaren Code gekennzeichnet, welcher den Typ bzw. die Funkcharakteristik eines jeweiligen Funkmoduls repräsentiert. Bei dem sichtbaren bzw. visuell wahrnehmbaren Code kann es sich um einen Farbcode, einen alphanumerischen Code, einen Symbolcode oder eine Kombination von mehreren der genannten Codes handeln. Unter einem Typ eines jeweiligen Funkmoduls werden diejenigen Funkmodule verstanden, die hinsichtlich ihrer Funkcharakteristik untereinander gleich sind, und insbesondere diejenigen Funkmodule, die zu einem bestimmten Satz von Funkmodulen gehören. Mit anderen Worten weisen Funkmodule des gleichen Typs auch den gleichen Code auf, was es erleichtert, zueinander kompatible Funkmodule an die verschiedenen Filmproduktionsgeräte des Ausrüstungssystems zu koppeln.

Gemäß einer weiteren Ausführungsform kann die Fernsteuereinheit des Ausrüstungssystems als eine Kamera-Fernsteuereinheit zum Fernsteuern einer Bewegtbildkamera mit Objektiv-Stellmotor ausgebildet sein, wobei der Objektiv-Stellmotor in die Bewegtbildkamera oder in das Kameraobjektiv integriert sein kann oder Teil einer externen Objektivring-Antriebseinheit sein kann. Bei dieser Ausführungsform weist die Fernsteuereinheit wenigstens ein bewegliches Bedienelement (z.B. Taster, Schalter, Drehsteller, Linearsteller) zum Einstellen von Steuerbefehlen für den Objektiv-Stellmotor und eine Auswerte- und Steuereinrichtung auf, wobei die Auswerte- und Steuereinrichtung dazu ausgebildet ist, Steuersignale für den Objektiv-Stellmotor in Abhängigkeit von den eingestellten Steuerbefehlen zu erzeugen und die erzeugten Steuersignale über die Schnittstelle der Fernsteuereinheit an ein gekoppeltes Funkmodul des Ausrüstungssystems zu übermitteln. Die Auswerteund Steuereinrichtung der Kamera-Fernsteuereinheit kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA). Eine derartige Fernsteuereinrichtung kann auch ein Basisteil umfassen, wobei das Bedienelement relativ zu dem Basisteil beweglich ist, und wobei die Steuerbefehle einer jeweiligen Position oder Bewegung des Bedienelementes relativ zu dem Basisteil entsprechen.

Gemäß einer weiteren Ausführungsform kann die Fernsteuereinheit des Ausrüstungssystems als eine Beleuchtungs-Fernsteuereinheit zum Fernsteuern einer Motivbeleuchtungsvorrichtung für einen Filmset ausgebildet sein, wobei die Fernsteuereinheit wenigstens ein Bedienelement zum Einstellen von Steuerbefehlen für die Motivbeleuchtungsvorrichtung aufweist (z.B. Taster, Schalter, Drehsteller, Linearsteller, oder berührungsempfindliches Bedienelement wie Touchscreen oder Touchpad). Ferner weist die Fernsteuereinheit eine Auswerte- und Steuereinrichtung auf, die dazu ausgebildet ist, Steuersignale für die Motivbeleuchtungsvorrichtung in Abhängigkeit von den eingestellten Steuerbefehlen zu erzeugen und die erzeugten Steuersignale über die Schnittstelle der Fernsteuereinheit an ein gekoppeltes Funkmodul des Ausrüstungssystems zu übermitteln. Die Auswerte- und Steuereinrichtung der Beleuchtungs-Fernsteuereinheit kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA).

Gemäß einer weiteren vorteilhaften Ausführungsform umfasst die genannte Gruppe von Filmproduktionsgeräten ferner ein Adaptermodul für eine Bewegtbildkamera, welches zusätzlich zu der Schnittstelle zum wahlweisen Koppeln mit einem der zwei verschiedenen Funkmodule eine Adapterschnittstelle zum Koppeln mit einer Bewegtbildkamera und eine Stellmotorschnittstelle zum Koppeln mit einer Objektivring-Antriebseinheit aufweist. Das Adaptermodul ist zur drahtgebundenen Kommunikation mit dem gekoppelten Funkmodul über die Schnittstelle des Adaptermoduls und zur drahtgebundenen Kommunikation mit der gekoppelten Bewegtbildkamera über die Adapterschnittstelle ausgebildet. Die Kommunikation mit der Bewegtbildkamera kann beispielsweise Steuersignale für das Beginnen oder Beenden einer Bewegtbildaufnahme oder Steuersignale für Bildfrequenzeinstellungen oder Verschlusszeiten umfassen, wobei diese Steuersignale insbesondere über das gekoppelte Funkmodul empfangen werden können. Bei der Objektivring-Antriebseinheit kann es sich, wie bereits erläutert, um eine externe Einheit handeln, die mit einem Kameraobjektiv verbunden wird, um mittels eines jeweiligen Stellmotors einen Objektivring des Kameraobjektivs zu drehen. Das Adaptermodul ist zur drahtgebundenen Kommunikation mit der Objektivring-Antriebseinheit über die Stellmotorschnittstelle ausgebildet. Die Kommunikation mit der Objektivring-Antriebseinheit kann Steuersignale für Objektivringeinstellungen umfassen, wobei auch diese Steuersignale insbesondere über das gekoppelte Funkmodul empfangen werden können.

Das Adaptermodul ermöglicht es somit, ein Funkmodul des Ausrüstungssystems auch mit einer Bewegtbildkamera zu koppeln, die keine unmittelbar passende Schnittstelle für das Funkmodul aufweist. Das Adaptermodul stellt insbesondere an einer Bewegtbildkamera vorhandene oder nachzurüstende Anschlüsse, die z.B. zum Koppeln mit einer systemfremden Fernbedienung zur Fernsteuerung bestimmter Kamerafunktionen eingerichtet sind, zum Koppeln mit einem der Funkmodule bereit und schafft somit eine Nachrüstlösung, um ursprünglich systemfremde Bewegtbildkameras in das vorliegende Ausrüstungssystem zu integrieren.

Gemäß einer weiteren vorteilhaften Ausführungsform kann zumindest eines der Filmproduktionsgeräte eine Erkennungseinrichtung aufweisen, die dazu konfiguriert ist, von dem gekoppelten Funkmodul eine Identifizierung der verwendeten Funkcharakteristik zu empfangen. Die Erkennungseinrichtung kann Teil einer entsprechend konfigurierten Auswerte- und Steuereinrichtung des Filmproduktionsgeräts sein, beispielsweise der bereits genannten Auswerte- und Steuereinrichtung. Die Identifizierung der verwendeten Funkcharakteristik kann eine vorbestimmte Kodierung eines Frequenzbereichs und/oder eines Übertragungsprotokolls oder eine vorbestimmte Kodierung des jeweiligen Typs der verschiedenen Funkmodule umfassen. Die Erkennungseinrichtung kann dazu konfiguriert sein, die empfangene Identifizierung einer vorbestimmten Funkcharakteristik zuzuordnen, beispielsweise aufgrund einer gespeicherten Zuordnungstabelle. Durch die Möglichkeit des Erkennens des Typs des gekoppelten Funkmoduls bzw. der verwendeten Funkcharakteristik kann diese Information an den Benutzer und/oder an andere Geräte signalisiert werden, beispielsweise um die einheitliche Verwendung eines bestimmten Typs von Funkmodulen bzw. einer Funkcharakteristik sicherzustellen.

Gemäß einer Ausführungsform kann ein derartiges Filmproduktionsgerät auch eine Anzeigeeinrichtung aufweisen, die dazu konfiguriert ist, eine Information über die empfangene Identifizierung bzw. die verwendete Funkcharakteristik anzuzeigen. Dadurch kann der Typ bzw. die Funkcharakteristik des gekoppelten Funkmoduls auch dann leicht erkannt werden, wenn ein Code der vorstehend genannten Art nicht sichtbar oder nicht vorhanden ist.

Die Erfindung wird nachfolgend anhand eines Ausführungsbeispiels mit Bezug auf die Zeichnungen beschrieben.

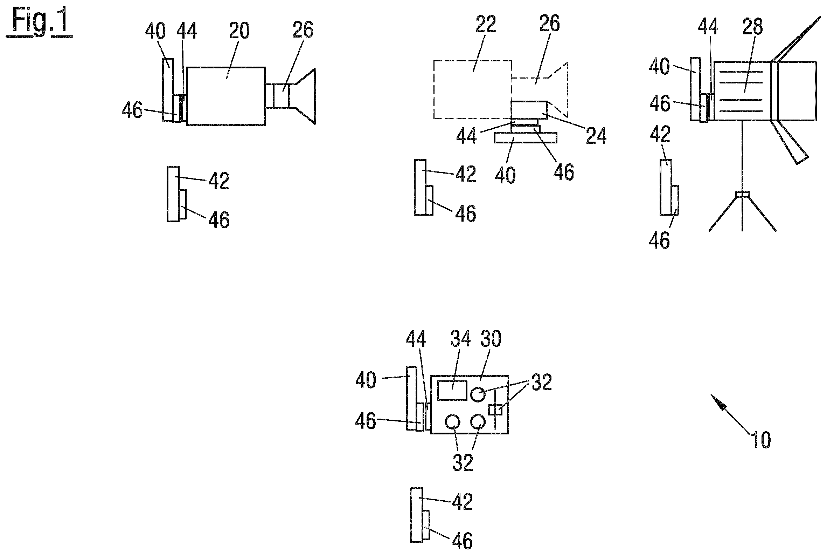

Fig. 1 zeigt in schematischer Darstellung ein Ausrüstungssystem gemäß einem Ausführungsbeispiel.

Fig. 1 zeigt ein beispielhaftes Ausrüstungssystem 10 für kinematografische Produktionen, welches mehrere Filmproduktionsgeräte umfasst, nämlich eine Bewegtbildkamera 20, eine Objektivring-Antriebseinheit 24, eine Motivbeleuchtungsvorrichtung 28 und eine Fernsteuereinheit 30.

An der Bewegtbildkamera 20 können verschiedene Parameter fernbedient eingestellt und/oder variiert werden, beispielsweise die Bildaufnahmefrequenz, die Verschlusszeit, oder die Irisblendenöffnung, die Fokuslage und/oder die Brennweite eines Objektivs 26 der Bewegtbildkamera 20.

Die Fernbedienung der Bewegtbildkamera 20 kann beispielsweise mittels der Fernsteuereinheit 30 erfolgen. Zum Bedienen der Kamerafunktionen weist die Fernsteuereinheit 30 mehrere Bedienelemente 32 auf. Zur Kontrolle der Einstellungen und/oder des von der Bewegtbildkamera 20 aufgenommenen und drahtlos übermittelten Bildes kann die Fernsteuereinheit 30 zusätzlich eine Anzeigevorrichtung 34 umfassen.

Die Objektivring-Antriebseinheit 24 kann an einem Objektiv 26 der Bewegtbildkamera 20 oder einer weiteren Bewegtbildkamera 22 angeordnet sein und eine oder mehrere Stellmotoren umfassen, die mechanisch mit Objektivringen des Objektivs 26 koppelbar sind, um verschiedene Objektivparameter wie die Irisblendenöffnung, die Fokuslage oder die Brennweite ferngesteuert einzustellen.

Die Motivbeleuchtungsvorrichtung 28 kann eine integrierte Lichtquelle umfassen, die fernbedient ein- und ausgeschaltet und deren Helligkeit und/oder Lichtfarbe bevorzugt ebenfalls fernbedient eingestellt werden kann. Weiterhin kann auch die Ausrichtung der Motivbeleuchtungsvorrichtung 28 verändert werden, beispielsweise über eine motorische Kipp- und Schwenkvorrichtung (nicht dargestellt).

Die Fernbedienung der Objektivring-Antriebseinheit 24 und der Motivbeleuchtungsvorrichtung 28 kann ebenfalls über die Fernsteuereinheit 30 oder eine hierzu baugleiche weitere Fernsteuereinheit oder auch über eine weitere Fernsteuereinheit mit einer abweichenden Anzahl, Anordnung und/oder Funktionalität der Bedienelemente erfolgen.

Jedem Filmproduktionsgerät 20, 24, 28, 30 und ggf. auch jeder weiteren Fernsteuereinheit sind jeweils zwei verschiedene Funkmodule 40, 42 zugeordnet, wobei alle Funkmodule 40 hinsichtlich ihrer Funkcharakteristik untereinander gleich sind und einen ersten Satz von Funkmodulen 40 bilden, und wobei die Funkmodule 42 ebenfalls hinsichtlich ihrer Funkcharakteristik untereinander gleich sind und einen zweiten Satz von Funkmodulen 42 bilden. Allerdings unterscheiden sich die Funkmodule 40 des ersten Satzes hinsichtlich ihrer Funkcharakteristik von den Funkmodulen 42 des zweiten Satzes, nämlich hinsichtlich eines verwendeten Frequenzbereichs und/oder eines verwendeten Übertragungsprotokolls.

Jedes Filmproduktionsgerät 20, 24, 28, 30 weist jeweils eine Schnittstelle 44 zum wahlweisen Koppeln mit einem der zwei verschiedenen Funkmodule 40, 42 auf, wobei jedes der zwei verschiedenen Funkmodule 40, 42 zur drahtlosen Übermittlung von Steuersignalen und zur drahtgebundenen Kommunikation mit dem gekoppelten Filmproduktionsgerät 20, 24, 28, 30 über die Schnittstelle 44 ausgebildet ist. Die drahtlose Übermittlung von Steuersignalen und/oder anderen Signalen kann unidirektional oder bidirektional erfolgen. Die Schnittstellen 44 der Filmproduktionsgeräte 20, 24, 28, 30 sind in mechanischer und elektrischer Hinsicht identisch zueinander ausgebildet.

Jedes Funkmodul 40, 42 weist eine jeweilige Gegenschnittstelle 46 auf, welche mit den Schnittstellen 44 der Filmproduktionsgeräte 20, 24, 28, 30 kompatibel ist, um ein Funkmodul 40, 42 mit einem jeweiligen Filmproduktionsgerät 20, 24, 28, 30 zu koppeln, wobei jeweils die Schnittstelle 44 zusammen mit der Gegenschnittstelle 46 eine mechanische und elektrische Verbindung zwischen dem gekoppelten Funkmodul 40, 42 und dem zugehörigen Filmproduktionsgerät 20, 24, 28, 30 herstellt.

Im vorliegenden Beispiel befinden sich die gekoppelten Funkmodule 40 an einer Außenseite des zugeordneten Filmproduktionsgeräts 20, 24, 28, 30. Gemäß einer Abwandlung können die gekoppelten Funkmodule 40 auch zumindest teilweise innerhalb eines jeweiligen Gerätegehäuses des zugeordneten Filmproduktionsgeräts 20, 24, 28, 30 angeordnet sein.

Das jeweilige Funkmodul 40, 42 weist im dargestellten Ausführungsbeispiel einen Funksender und einen Funkempfänger auf. Weiterhin weisen im dargestellten Ausführungsbeispiel die Funkmodule 40, 42 jeweils innenliegende Antennen auf, d.h. die Antennen befinden sich innerhalb eines Gehäuses der Funkmodule 40, 42. Gemäß einer weiteren Abwandlung können die Antennen auch extern bezüglich eines jeweiligen Modulgehäuses angeordnet sein (nicht dargestellt).

In der Darstellung von Fig. 1 sind alle Filmproduktionsgeräte 20, 24, 28, 30 mit den Funkmodulen 40 des ersten Satzes gekoppelt. Da die Funkmodule 40 untereinander typgleich sind, kommunizieren alle Filmproduktionsgeräte 20, 24, 28, 30 mit derselben Funkcharakteristik, d.h. in demselben Frequenzbereich und mit demselben Übertragungsprotokoll. Es versteht sich, dass im Einzelfall jedoch die verschiedenen Filmproduktionsgeräte 20, 24, 28, 30 eines Ausrüstungssystems 10 auf unterschiedlichen Frequenzen innerhalb des einheitlichen Frequenzbereichs kommunizieren können, um gegenseitige Störungen auszuschließen. Dies ist insbesondere dann sinnvoll, wenn mehrere Fernsteuereinheiten 30 eingesetzt werden sollen, die jeweils einem bestimmten zu steuernden Filmproduktionsgerät wie einer Bewegtbildkamera 20, einer Objektivring-Antriebseinheit 24 oder einer Beleuchtungseinheit 28 dediziert zugeordnet sind.

Wenn nun das Ausrüstungssystem 10 an einem anderen geographischen Ort eingesetzt werden soll, für den es aufgrund regulatorischer Bestimmungen nicht gestattet ist, die Funkmodule 40 des ersten Satzes zu nutzen, sondern nur Funkanwendungen zugelassen sind, denen die Funkmodule 42 des zweiten Satzes entsprechen, können alle Funkmodule 40 von den Filmproduktionsgeräten 20, 24, 28, 30 gelöst werden und stattdessen die Funkmodule 42 des zweiten Satzes angekoppelt werden. Da diese Funkmodule 42 wiederum typgleich sind, d.h. die gleiche Funkcharakteristik aufweisen, kann die Kommunikation der Filmproduktionsgeräte 20, 24, 28, 30 in der gleichen Weise wie mit den Funkmodulen 40 erfolgen, d.h. die vorgesehenen Kommunikationsbeziehungen der Filmproduktionsgeräte zueinander bleiben grundsätzlich erhalten. Durch die Möglichkeit, ein jeweiliges Filmproduktionsgerät 20, 24, 28, 30 wahlweise mit einem von mehreren verschiedenen Funkmodulen 40, 42 zu versehen, kann auf einfache Weise und bei geringem Kostenaufwand eine geeignete Funkcharakteristik ausgewählt werden.

Um eine Unterscheidung der verschiedenen Typen von Funkmodulen 40, 42 zu ermöglichen, kann jedes Funkmodul 40, 42 mit einem jeweiligen sichtbaren Code gekennzeichnet sein, beispielsweise einem Farbcode, einem alphanumerischen Code, einem Symbolcode oder einer Kombination von mehreren der genannten Codes, wobei der Code den Typ eines jeweiligen Funkmoduls 40, 42 repräsentiert. Beispielsweise können alle Funkmodule 40 des ersten Typs mit einem blauen Kreis und alle Funkmodule 42 des zweiten Typs mit einem roten Quadrat gekennzeichnet sein. Zusätzlich kann ein alphanumerischer Code aufgedruckt sein, beispielsweise die Länderkennungen derjenigen Länder, in denen ein Betrieb eines jeweiligen Funkmoduls 40, 42 gestattet ist.

Das Ausrüstungssystem 10 gemäß Fig. 1 umfasst für jedes Filmproduktionsgerät 20, 24, 28, 30 zwei verschiedene Funkmodule 40, 42. Selbstverständlich können für ein Filmproduktionsgerät 20, 24, 28, 30 auch drei oder mehr verschiedene Funkmodule vorgesehen sein.

Ebenfalls beispielhaft ist die Anzahl von Filmproduktionsgeräten 20, 24, 28, 30 in dem dargestellten Ausrüstungssystem 10. So kann die Anzahl von Filmproduktionsgeräten 20, 24, 28, 30 in einem Ausrüstungssystem 10 auch mehr oder weniger als vier betragen.

Typischerweise umfasst ein beispielhaftes Ausrüstungssystem zumindest ein zu steuerndes Filmproduktionsgerät, wie eine Bewegtbildkamera 20, eine Objektivring-Antriebseinheit 24 oder eine Motivbeleuchtungsvorrichtung 28, sowie weiterhin zumindest eine Fernsteuereinheit 30 als steuerndes Filmproduktionsgerät. Im vorliegenden Beispiel befinden sich die gekoppelten Funkmodule 40 an einer Außenseite des zugeordneten Filmproduktionsgeräts 20, 24, 28, 30. Gemäß einer Abwandlung können die gekoppelten Funkmodule 40 auch innerhalb eines jeweiligen Gerätegehäuses angeordnet sein.

Gemäß einer weiteren Abwandlung kann als weiteres Filmproduktionsgerät auch ein Adaptermodul (nicht dargestellt) für eine Bewegtbildkamera bereitgestellt werden, welches neben einer Schnittstelle 44 zum wahlweisen Koppeln mit einem der zwei verschiedenen Funkmodule 40, 42 zusätzlich eine Adapterschnittstelle zum Koppeln mit einer Bewegtbildkamera und eine Stellmotorschnittstelle zum Koppeln mit einer Objektivring-Antriebseinheit aufweist, wobei das Adaptermodul zur drahtgebundenen Kommunikation mit dem gekoppelten Funkmodul 40, 42 über die Schnittstelle 44, zur drahtgebundenen Kommunikation mit der gekoppelten Bewegtbildkamera über die Adapterschnittstelle und zur drahtgebundenen Kommunikation mit der Objektivring-Antriebseinheit über die Stellmotorschnittstelle ausgebildet ist.

### Bezugszeichenliste

- 10: Ausrüstungssystem
- 20, 22: Bewegtbildkamera
- 24: Objektivring-Antriebseinheit
- 26: Objektiv
- 28: Motivbeleuchtungsvorrichtung
- 30: Fernsteuereinheit
- 32: Bedienelement
- 34: Anzeigevorrichtung
- 40, 42: Funkmodul
- 44: Schnittstelle
- 46: Gegenschnittstelle

## Patentansprüche

1. Ausrüstungssystem (10) für kinematografische Produktionen, mit mehreren Filmproduktionsgeräten (20, 22, 24, 28, 30), wobei die mehreren Filmproduktionsgeräte (20, 22, 24, 28, 30) zumindest eine Bewegtbildkamera (20, 22) oder eine Objektivring-Antriebseinheit (24) oder eine Motivbeleuchtungsvorrichtung (28) und zumindest eine Fernsteuereinheit (30) zum Fernsteuern der Bewegtbildkamera (20, 22) oder der Objektivring-Antriebseinheit (24) oder der Motivbeleuchtungsvorrichtung (28) umfassen,
sowie mit zumindest einem ersten Satz und einem zweiten Satz von Funkmodulen (40, 42),
wobei jedes Filmproduktionsgerät (20, 22, 24, 28, 30) eine Schnittstelle (44) zum wahlweisen Koppeln mit einem der Funkmodule (40, 42) aufweist, wobei jedes der Funkmodule (40, 42) zur drahtlosen Übermittlung von Steuersignalen und zur drahtgebundenen Kommunikation mit dem gekoppelten Filmproduktionsgerät (20, 22, 24, 28, 30) über die Schnittstelle (44) ausgebildet ist,
wobei die Funkmodule (40) des ersten Satzes hinsichtlich ihrer Funkcharakteristik, und zwar hinsichtlich eines verwendeten Frequenzbereichs und/oder eines verwendeten Übertragungsprotokolls, untereinander gleich sind, wobei die Funkmodule (42) des zweiten Satzes hinsichtlich ihrer Funkcharakteristik untereinander gleich sind, und wobei die Funkmodule (40) des ersten Satzes sich hinsichtlich ihrer Funkcharakteristik von den Funkmodulen (42) des zweiten Satzes unterscheiden, so dass die Bewegtbildkamera (20, 22) oder die Objektivring-Antriebseinheit (24) oder die Motivbeleuchtungsvorrichtung (28) einerseits und die Fernsteuereinheit (30) andererseits mit Funkmodulen (40, 42) desselben Satzes gekoppelt werden können und somit hinsichtlich ihrer Funkcharakteristik zueinander kompatibel sind.

2. Ausrüstungssystem (10) nach Anspruch 1,
wobei jedes der Funkmodule (40, 42) eine Gegenschnittstelle (46) aufweist, wobei die Gegenschnittstellen (46) der Funkmodule (40, 42) zueinander identisch und zu den Schnittstellen (44) der Filmproduktionsgeräte (20, 22, 24, 28, 30) kompatibel sind.

3. Ausrüstungssystem (10) nach Anspruch 1 oder 2,
wobei jedes der Funkmodule (40, 42) eine Steuerschaltung aufweist, die dazu ausgebildet ist, ein per Funk empfangenes Steuersignal in ein elektrisches Signal umzuwandeln, welches an das gekoppelte Filmproduktionsgerät (20, 22, 24, 28, 30) übermittelt wird, und/oder ein von dem gekoppelten Filmproduktionsgerät (20, 22, 24, 28, 30) empfangenes elektrisches Signal in ein Steuersignal umzuwandeln, welches per Funk ausgesendet wird.

4. Ausrüstungssystem (10) nach einem der vorhergehenden Ansprüche, wobei das Ausrüstungssystem (10) wenigstens drei verschiedene Funkmodule (40, 42) umfasst, die sich hinsichtlich ihrer Funkcharakteristik voneinander unterscheiden.

5. Ausrüstungssystem (10) nach einem der vorhergehenden Ansprüche, wobei ein jeweiliges, an ein Filmproduktionsgerät (20, 22, 24, 28, 30) gekoppeltes Funkmodul (40, 42) außerhalb eines Gehäuses des Filmproduktionsgeräts (20, 22, 24, 28, 30) angeordnet ist.

6. Ausrüstungssystem (10) nach einem der vorhergehenden Ansprüche, wobei jedes Funkmodul (40, 42) eine extern oder intern angeordnete Antenne aufweist.

7. Ausrüstungssystem (10) nach einem der vorhergehenden Ansprüche, wobei jedes Funkmodul (40, 42) mit zumindest einem jeweiligen sichtbaren Code gekennzeichnet ist, welcher die Funkcharakteristik eines jeweiligen Funkmoduls repräsentiert, bevorzugt mit einem Farbcode, einem alphanumerischen Code, einem Symbolcode oder einer Kombination von mehreren der genannten Codes.

8. Ausrüstungssystem (10) nach einem der vorhergehenden Ansprüche, wobei die Fernsteuereinheit (30) als eine Kamera-Fernsteuereinheit zum Fernsteuern einer Bewegtbildkamera (20, 22) mit Objektiv-Stellmotor ausgebildet ist, und wobei die Fernsteuereinheit (30) ein bewegliches Bedienelement zum Einstellen von Steuerbefehlen für den Objektiv-Stellmotor und eine Auswerte- und Steuereinrichtung aufweist, wobei die Auswerte- und Steuereinrichtung dazu ausgebildet ist, Steuersignale für die Bewegtbildkamera (20, 22) in Abhängigkeit von den eingestellten Steuerbefehlen zu erzeugen und die erzeugten Steuersignale über die Schnittstelle (44) der Fernsteuereinheit (30) an ein gekoppeltes Funkmodul (40, 42) zu übermitteln.

9. Ausrüstungssystem (10) nach einem der vorhergehenden Ansprüche, wobei die Fernsteuereinheit (30) als eine Beleuchtungs-Fernsteuereinheit zum Fernsteuern einer Motivbeleuchtungsvorrichtung (28) ausgebildet ist, und wobei die Fernsteuereinheit (30) wenigstens ein Bedienelement zum Einstellen von Steuerbefehlen für die Motivbeleuchtungsvorrichtung (28) und eine Auswerte- und Steuereinrichtung aufweist, wobei die Auswerteund Steuereinrichtung dazu ausgebildet ist, Steuersignale für die Motivbeleuchtungsvorrichtung (28) in Abhängigkeit von den eingestellten Steuerbefehlen zu erzeugen und die erzeugten Steuersignale über die Schnittstelle (44) der Fernsteuereinheit (30) an ein gekoppeltes Funkmodul (40, 42) zu übermitteln.

10. Ausrüstungssystem (10) nach einem der vorhergehenden Ansprüche, wobei die genannten Filmproduktionsgeräte (20, 22, 24, 28, 30) ferner ein Adaptermodul für eine Bewegtbildkamera (20, 22) umfassen, welches zusätzlich zu der Schnittstelle (44) zum wahlweisen Koppeln mit einem der Funkmodule (40, 42) eine Adapterschnittstelle zum Koppeln mit der Bewegtbildkamera (20, 22) und eine Stellmotorschnittstelle zum Koppeln mit einer Objektivring-Antriebseinheit aufweist, wobei das Adaptermodul zur drahtgebundenen Kommunikation mit dem gekoppelten Funkmodul (40, 42) über die Schnittstelle (44), zur drahtgebundenen Kommunikation mit der gekoppelten Bewegtbildkamera (20, 22) über die Adapterschnittstelle und zur drahtgebundenen Kommunikation mit der Objektivring-Antriebseinheit über die Stellmotorschnittstelle ausgebildet ist.

11. Ausrüstungssystem (10) nach einem der vorhergehenden Ansprüche, wobei zumindest eines der Filmproduktionsgeräte eine Erkennungseinrichtung aufweist, die dazu konfiguriert ist, von dem gekoppelten Funkmodul (40, 42) eine Identifizierung der verwendeten Funkcharakteristik zu empfangen.

## Claims

1. An equipment system (10) for cinematographic productions, having a plurality of film production devices (20, 22, 24, 28, 30), wherein the plurality of film production devices (20, 22, 24, 28, 30) comprise at least one motion picture camera (20, 22) or one lens ring drive unit (24) or one motif lighting apparatus (28) and at least one remote control unit (30) for remotely controlling the motion picture camera (20, 22) or the lens ring drive unit (24) or the motif lighting apparatus (28);
and having at least a first set and a second set of radio modules (40, 42), wherein each film production device (20, 22, 24, 28, 30) has an interface (44) for a selective coupling to one of the radio modules (40, 42), wherein each of the radio modules (40, 42) is configured for a wireless transmission of control signals and for a wired communication with the coupled film production device (20, 22, 24, 28, 30) via the interface (44),
wherein the radio modules (40) of the first set are identical to one another with respect to their radio characteristics, namely with respect to a frequency range used and/or to a transmission protocol used, wherein the radio modules (42) of the second set are identical to one another with respect to their radio characteristics, and wherein the radio modules (40) of the first set differ from the radio modules (42) of the second set with respect to their radio characteristics so that the motion picture camera (20, 22) or the lens ring drive unit (24) or the motif lighting apparatus (28), on the one hand, and the remote control unit (30), on the other hand, can be coupled to radio modules (40, 42) of the same set and are thus compatible with one another with respect to their radio characteristics.

2. An equipment system (10) in accordance with claim 1,
wherein each of the radio modules (40, 42) has a counter interface (46), wherein the counter interfaces (46) of the radio modules (40, 42) are identical to one another and are compatible with the interfaces (44) of the film production devices (20, 22, 24, 28, 30).

3. An equipment system (10) in accordance with claim 1 or claim 2,
wherein each of the radio modules (40, 42) comprises a control circuit which is configured to convert a control signal received by radio into an electrical signal, which is transmitted to the coupled film production device (20, 22, 24, 28, 30), and/or to convert an electrical signal received by the coupled film production device (20, 22, 24, 28, 30) into a control signal which is transmitted by radio.

4. An equipment system (10) in accordance with any one of the preceding claims,
wherein the equipment system (10) comprises at least three different radio modules (40, 42) which differ from one another with respect to their radio characteristics.

5. An equipment system (10) in accordance with any one of the preceding claims,
wherein a respective radio module (40, 42) coupled to a film production device (20, 22, 24, 28, 30) is arranged outside a housing of the film production device (20, 22, 24, 28, 30).

6. An equipment system (10) in accordance with any one of the preceding claims,
wherein each radio module (40, 42) has an externally or internally arranged antenna.

7. An equipment system (10) in accordance with any one of the preceding claims,
wherein each radio module (40, 42) is marked with at least one respective visible code, which represents the radio characteristic of a respective radio module, preferably with a color code, an alphanumeric code, a symbol code, or a combination of a plurality of said codes.

8. An equipment system (10) in accordance with any one of the preceding claims,
wherein the remote control unit (30) is configured as a camera remote control unit for remotely controlling a motion picture camera (20, 22) having a lens actuating motor, and wherein the remote control unit (30) has a movable operating element for setting control commands for the lens actuating motor and has an evaluation and control device, wherein the evaluation and control device is configured to generate control signals for the motion picture camera (20, 22) in dependence on the set control commands and to transmit the generated control signals to a coupled radio module (40, 42) via the interface (44) of the remote control unit (30).

9. An equipment system (10) in accordance with any one of the preceding claims,
wherein the remote control unit (30) is configured as a lighting remote control unit for remotely controlling a motif lighting apparatus (28), and wherein the remote control unit (30) has at least one operating element for setting control commands for the motif lighting apparatus (28) and has an evaluation and control device, wherein the evaluation and control device is configured to generate control signals for the motif lighting apparatus (28) in dependence on the set control commands and to transmit the generated control signals to a coupled radio module (40, 42) via the interface (44) of the remote control unit (30).

10. An equipment system (10) in accordance with any one of the preceding claims,
wherein said film production devices (20, 22, 24, 28, 30) further comprise an adapter module for a motion picture camera (20, 22), said adapter module having, in addition to the interface (44) for a selective coupling to one of the radio modules (40, 42), an adapter interface for coupling to the motion picture camera (20, 22); and an actuating motor interface for coupling to a lens ring drive unit, wherein the adapter module is configured for a wired communication with the coupled radio module (40, 42) via the interface (44), for a wired communication with the coupled motion picture camera (20, 22) via the adapter interface, and for a wired communication with the lens ring drive unit via the actuating motor interface.

11. An equipment system (10) in accordance with any one of the preceding claims,
wherein at least one of the film production devices is a recognition device which is configured to receive an identification of the radio characteristic used from the coupled radio module (40, 42).

## Revendications

1. Système d'équipements (10) pour productions cinématographiques, avec plusieurs appareils de production cinématographique (20, 22, 24, 28, 30), lesdits plusieurs appareils de production cinématographique (20, 22, 24, 28, 30) comprenant au moins une caméra à images animées (20, 22) ou une unité d'entraînement de bague d'objectif (24) ou un dispositif d'éclairage de sujet (28) et au moins une unité de commande à distance (30) pour commander à distance la caméra à images animées (20, 22) ou l'unité d'entraînement de bague d'objectif (24) ou le dispositif d'éclairage de sujet (28), et avec au moins un premier ensemble et un deuxième ensemble de modules radio (40, 42),
dans lequel chaque appareil de production cinématographique (20, 22, 24, 28, 30) présente une interface (44) pour le couplage sélectif à l'un des modules radio (40, 42), chacun des modules radio (40, 42) est conçu pour la transmission sans fil de signaux de commande et pour la communication filaire avec l'appareil de production cinématographique couplé (20, 22, 24, 28, 30) via l'interface (44),
dans lequel les modules radio (40) du premier ensemble sont identiques entre eux en ce qui concerne leur caractéristique radio, à savoir en ce qui concerne une gamme de fréquences utilisée et/ou un protocole de transmission utilisé, les modules radio (42) du deuxième ensemble sont identiques entre eux en ce qui concerne leur caractéristique radio, et les modules radio (40) du premier ensemble se distinguent des modules radio (42) du deuxième ensemble en ce qui concerne leur caractéristique radio, de sorte que la caméra à images animées (20, 22) ou l'unité d'entraînement de bague d'objectif (24) ou le dispositif d'éclairage de sujet (28) d'une part, et l'unité de commande à distance (30) d'autre part, peuvent être couplés à des modules radio (40, 42) du même ensemble et sont ainsi compatibles entre eux en ce qui concerne leur caractéristique radio.

2. Système d'équipements (10) selon la revendication 1,
dans lequel chacun des modules radio (40, 42) présente une interface homologue (46), les interfaces homologues (46) des modules radio (40, 42) étant identiques entre elles et compatibles avec les interfaces (44) des appareils de production cinématographique (20, 22, 24, 28, 30).

3. Système d'équipements (10) selon la revendication 1 ou 2,
dans lequel chacun des modules radio (40, 42) présente un circuit de commande qui est conçu pour convertir un signal de commande reçu par radio en un signal électrique qui est transmis à l'appareil de production cinématographique couplé (20, 22, 24, 28, 30) ; et/ou pour convertir un signal électrique reçu de l'appareil de production cinématographique couplé (20, 22, 24, 28, 30) en un signal de commande qui est émis par radio.

4. Système d'équipements (10) selon l'une des revendications précédentes,
dans lequel le système d'équipements (10) comprend au moins trois modules radio différents (40, 42) qui se distinguent les uns des autres en ce qui concerne leur caractéristique radio.

5. Système d'équipements (10) selon l'une des revendications précédentes,
dans lequel un module radio (40, 42) respectif couplé à un appareil de production cinématographique (20, 22, 24, 28, 30) est disposé à l'extérieur d'un boîtier de l'appareil de production cinématographique (20, 22, 24, 28, 30).

6. Système d'équipements (10) selon l'une des revendications précédentes,
dans lequel chaque module radio (40, 42) présente une antenne disposée extérieurement ou intérieurement.

7. Système d'équipements (10) selon l'une des revendications précédentes,
dans lequel chaque module radio (40, 42) est identifié par au moins un code visible respectif qui représente la caractéristique radio d'un module radio respectif, de préférence par un code couleur, un code alphanumérique, un code symbolique ou une combinaison de plusieurs des codes mentionnés.

8. Système d'équipements (10) selon l'une des revendications précédentes,
dans lequel l'unité de commande à distance (30) est conçue comme une unité de commande à distance de caméra pour commander à distance une caméra à images animées (20, 22) avec un moteur de réglage d'objectif, et dans lequel l'unité de commande à distance (30) présente un élément de manœuvre mobile pour régler des instructions de commande pour le moteur de réglage d'objectif et un dispositif d'évaluation et de commande, le dispositif d'évaluation et de commande étant conçu pour générer des signaux de commande pour la caméra à images animées (20, 22) en fonction des instructions de commande réglées et pour transmettre les signaux de commande générés via l'interface (44) de l'unité de commande à distance (30) à un module radio couplé (40, 42).

9. Système d'équipements (10) selon l'une des revendications précédentes,
dans lequel l'unité de commande à distance (30) est conçue comme une unité de commande à distance d'éclairage pour commander à distance un dispositif d'éclairage de sujet (28), et dans lequel l'unité de commande à distance (30) présente au moins un élément de manœuvre pour régler des instructions de commande pour le dispositif d'éclairage de sujet (28) et un dispositif d'évaluation et de commande, le dispositif d'évaluation et de commande étant conçu pour générer des signaux de commande pour le dispositif d'éclairage de sujet (28) en fonction des instructions de commande réglées et pour transmettre les signaux de commande générés via l'interface (44) de l'unité de commande à distance (30) à un module radio couplé (40, 42).

10. Système d'équipements (10) selon l'une des revendications précédentes,
dans lequel lesdits appareils de production cinématographique (20, 22, 24, 28, 30) comprennent en outre un module adaptateur pour une caméra à images animées (20, 22) qui, en plus de l'interface (44) pour le couplage sélectif à l'un des modules radio (40, 42), présente une interface d'adaptateur pour le couplage à la caméra à images animées (20, 22) et une interface de moteur de réglage pour le couplage à une unité d'entraînement de bague d'objectif, le module adaptateur étant conçu pour la communication filaire avec le module radio couplé (40, 42) via l'interface (44), pour la communication filaire avec la caméra à images animées couplée (20, 22) via l'interface d'adaptateur et pour la communication filaire avec l'unité d'entraînement de bague d'objectif via l'interface de moteur de réglage.

11. Système d'équipements (10) selon l'une des revendications précédentes,
dans lequel au moins l'un des appareils de production cinématographique présente un moyen de détection configuré pour recevoir du module radio couplé (40, 42) une identification de la caractéristique radio utilisée.
